# FASCICULE DE BREVET EUROPEEN

(11) **EP 0 948 405 B1**
(45) Date de publication et mention de la délivrance du brevet: **26.06.2002**
(21) Numéro de dépôt: 96941724.5
(22) Date de dépôt: 09.12.1996
(51) Int. Cl.: B01J 27/08, B01J 37/22

(54) **PROCEDE D'ACTIVATION DE CATALYSEURS HALOGENES SUPPORTES**
VERFAHREN ZUM AKTIVIEREN VON HALOGENIERTEN TRÄGERKATALYSATOREN
PROCESS FOR ACTIVATING HALOGENATED SUPPORTED CATALYSTS

(43) Date de publication de la demande: 13.10.1999
(73) Titulaire: TOTAL RAFFINAGE DISTRIBUTION S.A., 92800 Puteaux (FR); Akzo Nobel N.V., 3800 AE Amersfoort (NL)
(72) Inventeur: MANGNUS, Peter, NL-2312 HM Leiden (NL); MILAN, Alain, F-76290 Montivilliers (FR); SZABO, Georges, F-76290 Montivilliers (FR)
(74) Mandataire: Jolly, Jean-Pierre
(86) Numéro de dépôt international: FR9601961
(87) Numéro de publication internationale: WO9825699

(56) Documents cités:
- EP-A- 0 439 338
- US-A- 3 979 333
- US-A- 4 465 786
- US-A- 4 654 463
- US-A- 5 292 988

## Description

La présente invention concerne un nouveau procédé d'activation de catalyseurs halogènes solides, et plus particulièrement de catalyseurs supportés possédant des sites de type Lewis.

On sait que les catalyseurs possédant un halogénure d'aluminium peuvent être utilisés dans de nombreux procédés de traitement d'hydrocarbures tels que les procédés d'isomérisation des paraffines, ou d'alkylation des hydrocarbures aromatiques ou de l'isobutane.

De tels catalyseurs ont été décrits dans la littérature, par exemple dans les brevets français 2 320 775, 2 206 124, 2 201 128, 1 546 658 ou anglais 952 348.

Ces catalyseurs comprennent en général un support, qui peut être une alumine, une silice, une silice alumine, un aluminosilicate ou un mélange de ces composés. Parmi ces catalyseurs, on peut citer ceux possédant des sites acides du type acide de Lewis, obtenus par dépôt sur la surface du support d'un halogénure métallique tel qu'un halogénure d'aluminium, de bore, de gallium, de zirconium, de molybdène, de tungstène ou de titane et, plus particulièrement, un chlorure d'aluminium, ces sites acides étant susceptibles d'être transformés en sites acides activés, vraisemblablement du type de Brönstedt (car semblables à ceux résultant de l'association AlCl₃/HCl des catalyseurs de type Friedel et Crafts), par action d'un acide fort tel qu'un acide halohydrique.

Parmi ces catalyseurs, il a déjà été établi (voir brevet français 2 649 989, dont les Demanderesses sont cotitulaires), que les catalyseurs dits "bimétalliques", c'est-à-dire possédant un métal de la mine du platine associé à des sites de type Lewis, constitués en particulier, en plus des halogénures d'aluminium, par les halogénures d'un métal appelé "promoteur", tel que le zirconium, le molybdène, le tungstène ou le titane, présentent une activité catalytique améliorée lorsqu'on les soumet à une étape d'activation dans des conditions particulières, entre l'étape de préparation proprement dite de ces catalyseurs et l'étape d'utilisation de ceux-ci dans les réacteurs où est conduite la réaction à catalyser.

Toujours selon la technique antérieure, on sait que l'activité de ces catalyseurs augmente considérablement lorsque les sites acides de type Lewis sont transformés en sites acides activés de type Brönstedt par réaction avec un acide halohydrique, généralement de l'acide chlorhydrique, à température élevée, c'est-à-dire au delà d'une température de l'ordre de 200°C et de préférence au delà de 350°C, à condition de procéder en milieu non-oxydant ou réducteur, c'est-à-dire en présence d'un gaz pouvant contenir au moins partiellement de l'hydrogène. Il s'agit dans ce cas d'une réaction directe des sites de type Lewis avec l'acide chlorhydrique, de façon à constituer des sites acides activés. Toutefois, pour promouvoir correctement ces sites activés et assurer une bonne activité du catalyseur, la réaction doit s'effectuer à des températures élevées, au moins égales à 400°C, et d'autant plus élevées que l'activité finale désirée est forte.

Une telle température, conjuguée à l'acidité du milieu, pose bien entendu des problèmes inévitables de corrosion du matériel utilisé, et contribue éventuellement à une pollution du catalyseur, ce qui se traduit par des coûts d'investissement très importants.

Par ailleurs, US-A-5 292 988, décrit un procédé de préparation d'un catalyseur comprenant trois étapes successives, à savoir :
- l'imprégnation d'un support de type alumine avec un sulfate d'au moins un métal appartenant au groupe : Cu, Fe, Co, Ni, Mn, Zn et Mg,
- la calcination du support ainsi obtenu,
- le chauffage du support ainsi calciné avec AlCl₃ et au moins un hydrocarbure chloré de type CCl₄.

Une étape supplémentaire peut être prévue après l'étape de calcination : elle consiste en un traitement du support calciné avec de l'HCl gazeux.

L'hydrocarbure chloré utilisé dans la troisième étape est un précurseur d'acide chlorhydrique qui, dans le milieu réactionnel, a pour effet de libérer cet acide.

L'agent d'activation est donc unique, et il y a réaction directe entre l'acide chlorhydrique (libéré par son précurseur) et les sites de Lewis du support. La température à laquelle se fait cette étape (de 40°C à 90°C) est trop basse pour ce type de réaction directe, ce qui explique les performances médiocres des catalyseurs ainsi obtenus.

En poursuivant ses travaux dans ce domaine, la Demanderesse a mis en évidence le fait qu'il est possible d'obtenir une amélioration sensible de l'activité par une voie d'activation différente de celles de la technique antérieure, c'est-à-dire moins coûteuse et moins polluante.

La Demanderesse a constaté en effet que, de façon surprenante, en incorporant une quantité substantielle d'un hydrocarbure paraffinique au milieu acide de la réaction, on peut activer le catalyseur dans des conditions plus douces, à des températures beaucoup plus modérées, de l'ordre de 150°C, et que cela engendre par conséquent des coûts de fabrication beaucoup moins élevés.

La présente invention a donc pour objet un procédé d'activation d'un catalyseur acide supporté, contenant des sites acides de type acides de Lewis déposés sur un support solide, par transformation, en milieu acide et non oxydant, desdits sites en sites acides activés, ce procédé comprenant une phase d'activation dans un milieu contenant un acide halohydrique ou un précurseur d'acide halohydrique, et étant caractérisé en ce que ladite phase d'activation est réalisée en présence d'au moins un hydrocarbure ou un dérivé d'hydrocarbure, avec un rapport halogène sur hydrocarbure supérieur à 0,001, à une température supérieure à 20°C, à une pression comprise entre 10⁵ et 50.10⁶ Pa, pendant une durée suffisante pour obtenir la transformation en sites acides activés.

L'hydrocarbure présent dans la phase d'activation est, avantageusement, un hydrocarbure paraffinique et la température de mise en oeuvre de cette phase est de préférence comprise entre 100°C et 250°C.

Dans la suite de la présente description, on se réfèrera plus particulièrement à l'utilisation d'acide chlorhydrique et de ses précurseurs, comme acide halohydrique, mais l'invention n'est naturellement par limitée à cet acide.

La méthode d'activation selon l'invention est donc très différente de celles décrites dans l'art antérieur. En effet, selon l'invention, l'hydrocarbure introduit dans le milieu réactionnel semble reagir avec les sites acides de type Lewis pour former un complexe sur lequel réagira ensuite l'acide halohydrique, notamment l'acide chlorhydrique. Contrairement aux méthodes d'activation usuelles, il ne semble pas se produire ici de réaction chimique directe entre les sites de type Lewis et l'acide chlorhydrique. Ceci présente l'avantage d'éviter les problèmes de corrosion et de résistance des matériaux rencontrés antérieurement, lorsque 1 a température d'activation était plus élevée, ainsi que les problèmes bien connus liés à l'utilisation d'acide chlorhydrique à température élevée.

L'hydrocarbure contenu dans le milieu dans lequel est réalisée ladite phase d'activation appartient à la famille des hydrocarbures en C4 à C8, de préférence des hydrocarbures en C5 à C6, et à celle de leurs dérivés halogénés.

Le milieu acide et non oxydant ou réducteur utilisé dans la phase d'activation du procédé conforme à l'invention contiendra avantageusement un acide halohydrique ou un précurseur d'acide halohydrique.

L'acide halohydrique est de préférence l'acide chlorhydrique et le précurseur d'acide halohydrique est de préférence le tétrachlorure de carbone.

Les sites acides de type sites de Lewis du catalyseur activé selon l'invention sont des halogénures métalliques du type de ceux obtenus par dépôt sur la surface du support d'un halogénure métallique (de préférence de chlore ou de brome) tel qu'un halogénure d'aluminium, de bore ou de gallium, de zirconium, plus particulièrement d'aluminium, ou de leurs mélanges.

Les supports des catalyseurs conformes à l'invention comprennent des substances réfractaires possédant une surface et un volume poreux spécifiques suffisants, et possédant en outre des fonctions chimiques superficielles. Ces supports peuvent être une alumine, une silice, une silice alumine, un aluminosilicate ou un mélange de ces derniers, la magnésie, la zircone, les oxydes de gallium, de titane, de thorium, de bore, ou un mélange de ces oxydes. Des alumines particulièrement adaptées sont la gamma-alumine et l'êta-alumine. Ces alumines servent de support pour les autres composants du catalyseur et elles doivent donc être, de préférence, sensiblement exemptes de sodium.

Les catalyseurs les plus avantageux sont ceux dont la teneur en métal de la mine du platine (c'est-à-dire les métaux choisis parmi le platine, le ruthénium, le rhodium, le palladium et l'iridium), rapportée au poids du support, est comprise entre 0,02 % et 2 % en poids, de préférence entre 0,05 % et 0,8 % en poids. Ces catalyseurs peuvent être bimétalliques ou trimétalliques. Ceci permet désormais de bénéficier des avantages procurés par un catalyseur contenant du platine et du zirconium, ce que ne permettait pas la technique antérieure, du fait de la température élevée qu'elle nécessitait.

Pour obtenir des propriétés catalytiques satisfaisantes, la teneur en métal de la mine du platine est de préférence supérieure à 0,10 %, mais, en raison du coût du métal, elle est de préférence limitée à 0,80 %. Le dépôt sur le support se fait par des moyens connus en soi, par exemple par imprégnation à l'aide de solutions contenant les métaux utilisés, soit sous forme anionique, soit sous forme cationique. Le support peut ensuite, de façon également connue en soi, être séché, puis calciné éventuellement en milieu réducteur à une température généralement comprise entre 400 et 600°C.

L'étape destinée à la formation sur le support d'un ou de plusieurs halogénures métalliques du type acide de type Lewis peut intervenir de plusieurs façons, également toutes connues en soi, dont on rappellera brièvement les caractéristiques.

Une première méthode a été décrite par exemple dans le brevet anglais n° 952 348, dans le cas du dépôt d'un halogénure d'aluminium. Selon cette méthode, on réalise le dépôt d'un précurseur du site de Lewis par action en milieu anhydre de trialkylaluminium et, en particulier, de triisobutylaluminium, fixant ainsi le précurseur de site de Lewis par élimination d'une molécule d'isobutane. Le produit ainsi obtenu est alors transformé en dihalogénure d'aluminium par réaction avec de l'acide chlorhydrique anhydre.

Une variante de la méthode précédente a été décrite par exemple dans le brevet français n° 2 206 124, selon laquelle le précurseur du dichloroaluminate est préparé cette fois par réaction du support avec un halogénure d'hydrocarbylaluminium, toujours en milieu anhydre, avant transformation en dichlorure, également par l'acide chlorhydrique.

Une troisième méthode, plus directe, telle que décrite dans les brevets français n° 2 202 128 et n° 2 320 775, consiste à utiliser directement la réaction du support avec l'halogénure métallique. Ce dernier étant un solide, il est sublimé à température élevée, de préférence supérieure à 200°C, en présence d'un gaz diluant.

Le milieu acide et non oxydant utilisé dans la phase d'activation du procédé conforme à l'invention contiendra de l'hydrogène et/ou un gaz inerte vis-à-vis des constituants du catalyseur, ou un précurseur d'hydrogène ou de gaz inerte,dans le cas où le catalyseur contient au moins un métal de la mine du platine. La présence d'hydrogène dans le milieu réactionnel est nécessaire lorsque le catalyseur à activer est constitué d'au moins un métal de la mine de platine tel que le platine, le ruthénium, le rhodium, le palladium ou l'iridium. En effet, le rôle de l'hydrogène est d'éviter que le platine ne vienne déshydrogéner de manière irréversible les hydrocarbures présents dans le milieu, ce qui aurait pour conséquence d'empoisonner les sites métalliques et donc de nuire à la stabilité du catalyseur.

Le procédé d'activation du catalyseur selon l'invention présente l'avantage d'être réalisable aussi bien pendant la préparation du catalyseur chez le fabricant que directement in situ dans le réacteur où s'effectue la réaction nécessitant un tel catalyseur.

Lorsque le catalyseur possédant les sites acides de type Lewis est activé chez le fabricant conformément à la présente invention, le catalyseur activé doit être isolé, puis transporté à l'abri de l'humidité.

Lorsque l'étape d'activation s'effectue in situ, le catalyseur possédant encore des sites de type Lewis est placé dans les conditions opératoires de la réaction désirée. En particulier, pour une réaction d'isomérisation de paraffines, les conditions opératoires sont une température comprise entre 50°C et 250°C, une pression comprise entre 10⁵ et 5.10⁶ Pa, un rapport molaire hydrogène sur hydrocarbure compris entre 0,001 et 10, et une vitesse spatiale horaire comprise entre 0,1 et 10 h⁻¹.

La vitesse spatiale horaire représente la quantité d'hydrocarbure passant sur une quantité unitaire de catalyseur en une heure.

Quelle que soit l'opération réalisée, l'activation du catalyseur est achevée lorsque la teneur finale en halogène, notamment en chlore, du catalyseur est comprise entre 2 % et 10 % en poids, de préférence entre 3 % et 8 % en poids. La durée de passage de la charge hydrocarbonée sur le catalyseur doit être suffisante pour que au moins 0,5 % en poids de chlore, par rapport au poids de catalyseur, passe à travers le lit catalytique.

Une source préférée de chlore pourra être un hydrocarbure chloré de la charge elle-même. Cette source de chlore présente l'avantage d'éviter un apport extérieur de chlore, qui contribuerait inévitablement à augmenter les coûts du procédé.

Cet hydrocarbure chloré pourra être choisi parmi les composés suivants : tétrachlorure de carbone, chlorure d'éthane, chlorure de propane, chlorure de butane, chlorure d'isobutane.

Le rapport chlore sur hydrocarbure nécessaire au procédé d'activation selon l'invention doit être supérieur à 0,001, de préférence supérieur à 0,005, de manière à favoriser immédiatement la formation du complexe hydrocarbure/site de type Lewis par adsorption, et non pas l'attaque directe par l'acide chlorhydrique des sites de type Lewis. En effet, si l'acide chlorhydrique était mis en contact le premier avec le catalyseur, il réagirait de manière directe avec les sites de type Lewis, ce qui, à la température de l'invention, conduirait à une transformation incomplète des sites de type Lewis en sites de type Brönstedt.

La mise en contact du catalyseur avec l'hydrocarbure et l'acide chlorhydrique peut s'effectuer de manière continue ou discontinue. On pourra retenir les combinaisons suivantes : l'hydrocarbure et l'acide introduits simultanément, ou bien l'hydrocarbure introduit avant l'acide, ou encore l'hydrocarbure et l'acide introduits simultanément suivis par l'acide à nouveau.

La pression partielle en hydrocarbure est au moins égale à celle en acide chlorhydrique qui est comprise entre 10² Pa et 105 Pa.

A l'issue de l'étape d'activation, dont la durée est généralement comprise entre un quart d'heure et plusieurs heures, le catalyseur possèdera avantageusement :
- une teneur en platine qui, rapportée au poids du support, sera comprise entre 0,05 % et 5 % ;
- une teneur éventuelle en métal du type zirconium, molybdène, tungstène ou titane qui, rapportée au poids du support, sera comprise entre 0,05 % et 10 % ;
- une teneur en aluminium ajouté, en bore ou en gallium qui, rapportée au poids du support, sera comprise entre 1% et 15 % ;
- une teneur totale en halogène qui, rapportée au poids du support, sera comprise entre 0,5 % et 10 %.

En outre, le rapport métal de la mine du platine sur métal promoteur du catalyseur activé sera avantageusement compris entre 0,25 % et 5 %.

Les exemples qui vont suivre ont pour but de mettre en évidence la supériorité des catalyseurs activés selon la présente invention, par rapport à l'art antérieur. Ils ne sauraient toutefois la limiter.

### Exemple 1

Cet exemple concerne un mode de préparation de catalyseurs non activés. Il s'agit ici d'un catalyseur d'isomérisation, mais ce catalyseur pourrait être utilisé dans tout autre procédé.

Le support réfractaire utilisé ici pour tous les catalyseurs est une alumine, dont les caractéristiques moyennes sont les suivantes :
- surface spécifique : 200 m²/g,
- volume poreux : 0,50 cm³/g,
- rayon moyen des pores : 50.10⁻⁸ cm (50 Å),
- forme : extrudés de 1,5 mm de diamètre moyen.

L'alumine est, après déshydratation, divisée en deux lots de 100 g, notés respectivement A et B. Le lot B est imprégné avec un sel de zirconium dans 250 cm³ d'acide chlorhydrique normal, puis subit une évaporation dans un évaporateur rotatif, un séchage vers 120°C, puis une calcination pendant 2 heures à 600°C.

Chaque lot est ensuite plongé dans une solution diluée d'acide hexachloroplatinique en circulation, dont la concentration initiale en platine est telle que, après essorage puis séchage à 120°C, le catalyseur préparé à partir du lot A (catalyseur A) contienne environ 0,35 % en poids de platine, et le catalyseur préparé à partir du lot B (catalyseur B) contienne environ 0,35 % en poids de platine et 0,60 % en poids de zirconium. Les solides sont alors calcinés vers 530°C dans un four à moufle, puis soumis à une réduction par l'hydrogène pendant environ 1 heure à 500°C. Ils contiennent environ 1,4 % en poids de chlore.

Chaque lot de catalyseur A et B est placé dans un réacteur en acier inoxydable sous gaz inerte. On introduit ensuite, à 50°C, 500 cm³ d'une solution normale de dichloréthylaluminium dans de l'heptane normal. Après une heure, on élimine le solvant et l'on sèche le solide obtenu. On obtient ainsi deux catalyseurs, le catalyseur A comprenant du platine et des sites acides de type Lewis à base d'aluminium et le catalyseur B comprenant du platine, des sites acides de type Lewis et du zirconium.

Les caractéristiques des catalyseurs non activés ainsi préparés sont rassemblées dans le tableau I suivant, où les teneurs sont exprimées en % en poids.

**TABLEAU I**

| Catalyseur de départ | Teneur en platine | Second Sel d'imprégnation | Teneur en second métal (Zr) | Teneur en chlore |
|---|---|---|---|---|
| A | 0,33 | / | / | 6,0 |
| B | 0,35 | ZrO (NO₃)₃,2 H₂O | 0,60 | 6,2 |

On procède alors à des essais destinés à mettre en évidence l'influence de la présence d'hydrocarbure paraffinique sur l'étape d'activation, afin de transformer les sites de Lewis présents sur le catalyseur en sites acides activés de type Brönstedt.

Dans ce but, 10 grammes de chacun des échantillons A et B non activés sont placés dans un réacteur et balayés pendant une demi-heure par de l'hydrogène contenant ou non de l'acide chlorhydrique anhydre, sous la pression atmosphérique, à différentes températures.

On obtient ainsi deux séries de catalyseurs A1 et B1 activés sans la présence d'hydrocarbures.

Leur activité a été déterminée par un test d'isomérisation d'une charge paraffinique.

Il s'agit d'un mélange de 45 % de n-pentane, de 45 % de n-hexane et de 10 % de cyclohexane.

Les conditions de ce test sont :
- Pression totale : 30.10⁵ Pa
- Température : 145°C
- Rapport molaire H²/Hydrocarbure : 3
- Vitesse spatiale horaire : 2 poids de charge pour 1 poids de catalyseur par heure (PPH).

La charge contient 300 ppm de chlore sous forme de tétrachlorure de carbone.

Ce test permet de déterminer le taux d'isomérisation (TIN) qui est la somme du pourcentage d'iso-pentane dans les pentanes et du pourcentage de 2,2-di-méthyl-butane dans les hexanes.

Les conditions d'activation et les résultats de ces tests sont rassemblés dans le Tableau II ci-après :

**TABLEAU II**

| Conditions d'activation | | | | Activité des catalyseurs | |
|---|---|---|---|---|---|
| Température (°C) | Débits (l/h/10g de catalyseur) | | Teneur en acide % HCl | TIN | |
| | H2 | HCl | | CatalyseurA1 | CatalyseurB1 |
| 150 | 4,2 | 0 | 0 | 0 | 1 |
| 220 | 4,2 | 0,74 | 15 | 12 | 12 |
| 450 | 4,2 | 0,74 | 15 | 85 | 89 |

On constate, sur ce tableau, que l'activation des catalyseurs A1 et B1 en l'absence d'hydrocarbure ne se fait correctement qu'à des températures élevées.

Par ailleurs, 10 grammes de chacun des catalyseurs A et B non activés sont ensuite placés dans un réacteur et balayés à une température donnée, pendant un temps donné (voir Tableau III ci-après), par de l'hydrogène, au débit de 5 litres/heure, et un mélange d'hydrocabures constitué de 45 % de n-hexane et de 10 % de cyclohexane, contenant du tétrachlorure de carbone (on peut également utiliser tout autre hydrocarbure chloré, précurseur de HCl) à différentes teneurs, avec un débit de 20 grammes/heure, la pression totale étant de 30.10⁵ Pa.

Après ces expériences d'activation on obtient deux nouvelles séries de catalyseurs A2 et B2, activés en présence d'hydrocarbures.

Leur activité a été déterminée dans un test d'isomérisation d'une charche paraffinique, comme précédemment, en utilisant un mélange de 45 % de n-pentane, de 45 % de n-hexane et de 10 % de cyclohexane contenant 300 ppm de chlore sous forme de tétrachlorure de carbone comme charge et dans les conditions de 30.10⁵ Pa de pression totale, à une température de 145°C, avec un rapport molaire H2/Hydrocarbure de 3, une vitesse spatiale horaire de 2 poids de charge pour 1 poids de catalyseur par heure (PPH).

Les conditions d'activation et les résultats des tests sont rassemblés dans le Tableau III ci-après.

**TABLEAU III**

| Conditions d'activation | | | Activité des catalyseurs | |
|---|---|---|---|---|
| Température (°C) | Rapport Cl/HC | Durée (heures) | (TIN) | |
| | | | Catalyseur A2 | Catalyseur B2 |
| 145 | 0,00065 | 12 | 56 | 56 |
| 145 | 0,024 | 0,75 | 93 | 94 |
| 110 | 0,024 | 0,75 | 90 | 92 |

On constate, sur ce tableau, que l'activation selon l'invention peut se faire à des températures modérées, environ 150°C. Une conséquence particulièrement intéressante tient au fait que l'étape d'activation peut aisément être réalisée sur le site de production dans le réacteur d'isomérisation lui-même.

On constate également qu'une étape d'activation rapide ne peut s'effectuer qu'avec un rapport acide chlorhydrique/hydrocarbure suffisant, d e préférence supérieur à 0,007.

On constate, par ailleurs, que plusieurs types d'hydrocarbures peuvent être utilisés dans l'activation selon l'invention.

### EXEMPLE 2

Cet exemple vise à mettre en évidence le mode de mise en contact préféré du catalyseur avec l'hydrocarbure et l'acide chlorhydrique.

Les catalyseurs A et B sont préparés de la même manière que dans l'exemple 1.

10 g de chacun des catalyseurs A et B non activés sont ainsi placés dans un réacteur et balayés pendant une heure sous une pression totale de 10⁵ Pa et à une température de l'ordre de 150°C.

On compare deux méthodes d'activation de ces catalyseurs :
- la première méthode consiste, dans les conditions énoncées ci-dessus à faire passer un mélange d'hydrogène et d'acide chlorhydrique pendant 0,25 heure sur les catalyseurs A et B puis pendant 1 heure on ajoute l'hydrocarbure (on choisit ici le n-hexane).
- la seconde méthode consiste à faire passer directement le mélange hydrogène, acide chlorhydrique et l'hydrocarbure (n-hexane) sur les catalyseurs A et B.

Les résultats des essais donnant les catalyseurs A3 et B3 ainsi activés sont rassemblés dans le Tableau IV ci-après.

Les deux premières lignes de résultats du tableau concernent les catalyseurs A3 et B3 activés selon la première méthode d'activation.

La dernière ligne de résultats du tableau concerne les catalyseurs A3 et B3 activés selon la seconde méthode d'activation.

L'activité des catalyseurs A3 et B3 est mesurée par le même test d'isomérisation que celui utilisé dans l'exemple 1.

**TABLEAU IV**

| Conditions d'activation | | | | | Activité des catalyseurs | |
|---|---|---|---|---|---|---|
| Température (°C) | Débits (l/h/10g de catalyseur) | | | Durée (heures) | TIN | |
| | H₂ | HCl | n-Hexane | | CatalyseurA3 | CatalyseurB3 |
| 150 | 4,2 | 0,74 | 0 | 0,25 | | |
| puis 150 | 4,2 | 0,74 | 0,93 | 1 | 10 | 10 |
| 150 | 4,2 | 0,74 | 0,93 | 1 | 90 | 91 |

On constate, sur ce tableau, que, pour une bonne activation, on ne doit pas mettre en contact le catalyseur avec l'acide chlorhydrique seul, sans l'hydrocarbure.

### EXEMPLE 3

Cet exemple concerne ici l'utilisation de catalyseurs activés selon l'invention, dans un procédé d'alkylation de l'isobutane par le butène-2-trans. Le catalyseur est préparé de la même manière que dans les exemples précédents mais ne contient pas de platine.

En effet, on place 100 g du support alumine de l'exemple 1, préalablement calciné à 530°C, dans un réacteur en acier inoxydable sous gaz inerte. On introduit ensuite à 50°C 500cm³ d'une solution normale de dichloréthylaluminium dans de l'heptane normal. Après une heure, on élimine le solvant et on sèche le solide obtenu. On obtient ainsi un catalyseur comprenant des sites acides de type Lewis à base d'aluminium.

10 g de ce catalyseur non activé sont ainsi placés dans un réacteur et balayés pendant une heure sous une pression totale de 10⁵ Pa, à une température de 150°C, par 4,2 l d'hydrogène, 0,74 l d'acide chlorhydrique et 0,93 l de n-hexane.

On fait passer ensuite, sur ces 10 g de solide obtenu après activation, une charge composée de 14 moles d'isobutane et d'une mole de butène-2-trans, avec un débit total de 35 g/h, à la température de 0°C et sous une pression de 20.10⁵ Pa.
Après une heure de réaction, les résultats sont les suivants :

| | |
|---|---|
| Conversion du butène-2-trans | 73,3%, |
| Rendement en octanes | 106,7%. |

Les octanes sont constitués de 86,7% de triméthylpentane, dans une proportion importante de 2,2,4-triméthylpentane (42,85 %).

On constate que le catalyseur activé selon l'invention convient également aux réactions d'alkylation.

## Revendications

1. Procédé d'activation d'un catalyseur acide supporté, contenant des sites acides de type acides de Lewis déposés sur un support solide, par transformation, en milieu acide et non oxydant, desdits sites en sites acides activés, ce procédé comprenant une phase d'activation dans un milieu contenant un acide halohydrique ou un précurseur d'acide halohydrique, et étant **caractérisé en ce que** ladite phase d'activation est réalisée en présence d'au moins un hydrocarbure ou un dérivé d'hydrocarbure, avec un rapport halogène sur hydrocarbure supérieur à 0,001, à une température supérieure à 20°C, à une pression comprise entre 10⁵ et 50.10⁶ Pa, pendant une durée suffisante pour obtenir la transformation en sites acides activés.

2. Procédé selon la revendication 1, **caractérisé en ce que** l'hydrocarbure présent dans la phase d'activation est un hydrocarbure paraffinique.

3. Procédé selon l'une des revendications 1 et 2, **caractérisé en ce que** l'hydrocarbure contenu dans le milieu dans lequel est conduite ladite phase d'activation appartient à la famille des hydrocarbures en C4 à C8, de préférence des hydrocarbures en C5 et C6, et à celle de leurs dérivés halogénés.

4. Procédé selon l'une des revendications 1 à 3, **caractérisé en ce que** la phase d'activation est réalisée à une température comprise entre 100°C et 250°C.

5. Procédé selon l'une des revendications 1 à 4, **caractérisé en ce que** les sites acides de type sites de Lewis sont des halogénures métalliques du type de ceux obtenus par dépôt sur la surface du support d'un halogénure métallique (de préférence de chlore ou de brome) tel qu'un halogénure d'aluminium, de bore ou de gallium, de zirconium, plus particulièrement d'aluminium, ou de leurs mélanges.

6. Procédé selon l'une des revendications 1 à 5, **caractérisé en ce** l'activation est réalisée avec un rapport halogène sur hydrocarbure supérieur à 0,001, de préférence supérieur à 0,005.

7. Procédé selon l'une des revendications 1 à 6, **caractérisé en ce que** l'acide halohydrique est mis en contact avec le catalyseur après adsorption de l'hydrocarbure sur le catalyseur.

8. Procédé selon l'une des revendications 1 à 7, **caractérisé en ce que** l'acide halohydrique ou son précurseur est introduit dans le milieu dans lequel est réalisé l'activation de manière continue ou discontinue.

9. Procédé selon l'une des revendications 1 à 8, **caractérisé en ce que** la durée de passage de la charge hydrocarbonée sur le catalyseur est suffisante pour que au moins 0,5 % en poids de chlore par rapport au poids de catalyseur passe à travers le lit catalytique.

10. Procédé selon l'une des revendications 1 à 9, **caractérisé en ce que**, lorsque l'activation réalisée in situ dans le réacteur d'isomérisation est achevée, le catalyseur est placé à une température comprise entre 50°C et 250°C, sous une pression comprise entre 10⁵ et 5.10⁶ Pa, avec un rapport hydrogène sur hydrocarbure compris entre 0,001 et 10 et une vitesse spatiale horaire comprise entre 0,1 et 10 h⁻¹.

11. Procédé selon l'une des revendications 1 à 10, **caractérisé en ce que** le catalyseur contient au moins un métal de la mine du platine.

12. Procédé selon l'une des revendications 1 à 11, **caractérisé en ce que** la teneur en métal de la mine du platine rapportée au poids du support est comprise entre 0,02 % et 2 % en poids, de préférence, entre 0,05 % et 0,8 %.

13. Procédé selon l'une des revendications 1 à 12, **caractérisé en ce que** le catalyseur est du type bimétallique ou trimétallique

14. Procédé selon l'une des revendications 1 à 13, **caractérisé en ce que** le support catalytique solide est une alumine, une silice, une silice alumine, une aluminosilicate ou un mélange de ces derniers, la magnésie, la zircone, un oxyde de gallium, de titane, de thorium, de bore, ou un mélange de ces oxydes.

15. Procédé selon l'une des revendications 1 à 14, **caractérisé en ce que** le support catalytique est une gamma-alumine ou une éta-alumine.

16. Procédé selon l'une des revendications 1 à 15, **caractérisé en ce que** l'acide halohydrique est généré in situ dans le réacteur d'utilisation du catalyseur à partir d un précurseur de cet acide.

17. Procédé selon l'une des revendications 1 à 16, dans lequel l'acide halohydrique est l'acide chlorhydrique, **caractérisé en ce que** le précurseur d'acide halohydrique est un chlorure d'alcane, en particulier le tétrachlorure de carbone.

18. Procédé selon l'une des revendications 1 à 17, **caractérisé en ce que** la pression partielle en acide halohydrique est de préférence comprise entre 10² Pa et 10⁵ Pa, et la pression partielle en hydrocarbure est au moins égale à celle de l'acide halohydrique.

19. Procédé selon l'une des revendications 1 à 18, **caractérisé en ce que**, lorsque le catalyseur contient au moins un métal de la mine de platine, le milieu acide et non oxydant contient de l'hydrogène et/ou un gaz inerte vis-à-vis des constituants du catalyseur.

## Claims

1. A process for activating a supported acid catalyst, containing acid sites of the Lewis acid type deposited on a solid support, by conversion, in an acidic, non-oxidising medium, of said sites into activated acid sites, said process comprising an activation stage in a medium containing a hydrohalic acid or a hydrohalic acid precursor, and being **characterised in that** said activation stage is performed in the presence of at least one hydrocarbon or hydrocarbon derivative, with a ratio of halogen to hydrocarbon greater than 0.001, at a temperature greater than 20°C, at a pressure of between 10⁵ and 50.10⁶ Pa, for a period sufficient to achieve conversion into activated acid sites.

2. A process according to claim 1, **characterised in that** the hydrocarbon present in the activation stage is a paraffin hydrocarbon.

3. A process according to one of claims 1 and 2, **characterised in that** the hydrocarbon contained in the medium in which said activation stage is carried out belongs to the family of C4 to C8 hydrocarbons, preferably C5 and C6 hydrocarbons, and to that of their halogenated derivatives.

4. A process according to one of claims 1 to 3, **characterised in that** the activation stage is performed at a temperature of between 100°C and 250°C.

5. A process according to one of claims 1 to 4, **characterised in that** the acid sites of the Lewis site type are metal halides of the type obtained by deposition on the surface of the support of a metal halide (preferably of chlorine or bromine) such as an aluminium, boron, gallium or zirconium halide, more particularly an aluminium halide, or mixtures thereof.

6. A process according to one of claims 1 to 5, **characterised in that** activation is performed with a halogen to hydrocarbon ratio of greater than 0.001, preferably greater than 0.005.

7. A process according to one of claims 1 to 6, **characterised in that** the hydrohalic acid is brought into contact with the catalyst after adsorption of the hydrocarbon on the catalyst.

8. A process according to one of claims 1 to 7, **characterised in that** the hydrohalic acid or its precursor is introduced continuously or discontinuously into the medium in which activation is performed.

9. A process according to one of claims 1 to 8, **characterised in that** the residence time of the hydrocarbon feedstock on the catalyst is sufficient for at least 0.5% by weight of chlorine, relative to the weight of the catalyst, to pass through the catalyst bed.

10. A process according to one of claims 1 to 9, **characterised in that**, when the activation performed in situ in the isomerisation reactor is complete, the catalyst is brought to a temperature of between 50°C and 250°C, under a pressure of between 10⁵ and 5.10⁶ Pa, with a ratio of hydrogen to hydrocarbon of between 0.001 and 10 and an hourly space velocity of between 0.1 and 10 h⁻¹.

11. A process according to one of claims 1 to 10, **characterised in that** the catalyst contains at least one metal of the platinum group.

12. A process according to one of claims 1 to 11, **characterised in that** the content of the platinum group metal relative to the weight of the support is between 0.02% and 2% by weight, preferably between 0.05% and 0.8%.

13. A process according to one of claims 1 to 12, **characterised in that** the catalyst is of the bimetallic or trimetallic type.

14. A process according to one of claims 1 to 13, **characterised in that** the solid catalyst support is an alumina, a silica, an alumino-silica, an alumino-silicate or a mixture of the latter, magnesium oxide, zirconia, gallium oxide, titanium oxide, thorium oxide, boron oxide or a mixture of said oxides.

15. A process according to one of claims 1 to 14, **characterised in that** the catalyst support is a gamma alumina or an eta alumina.

16. A process according to one of claims 1 to 15, **characterised in that** the hydrohalic acid is generated in situ from a precursor of said acid in the reactor in which the catalyst is used.

17. A process according to one of claims 1 to 16, in which the hydrohalic acid is hydrochloric acid, **characterised in that** the hydrohalic acid precursor is an alkane chloride, in particular carbon tetrachloride.

18. A process according to one of claims 1 to 17, **characterised in that** the hydrohalic acid partial pressure is preferably between 10² Pa and 10⁵ Pa and the hydrocarbon partial pressure is at least equal to that of the hydrohalic acid.

19. A process according to one of claims 1 to 18, **characterised in that**, when the catalyst contains at least one platinum group metal, the acidic, non-oxidising medium contains hydrogen and/or a gas which is inert with regard to the constituents of the catalyst.

## Patentansprüche

1. Verfahren zum Aktivieren eines sauren Trägerkatalysators, der Säurestellen vom Lewis-Säuretyp enthält, die auf einem festen Träger niedergeschlagen wurden, mittels Umwandlung der besagten Stellen in aktivierte Säurestellen in saurem und nicht-oxidierendem Milieu, wobei das Verfahren eine Phase der Aktivierung in einem Milieu, welches eine Halogenwasserstoffsäure oder einen Vorläufer der Halogenwasserstoffsäure enthält, umfaßt und **dadurch gekennzeichnet ist, daß** die Phase der Aktivierung realisiert wird in Gegenwart von mindestens einem Kohlenwasserstoff oder einem Kohlenwasserstoffderivat mit einem Verhältnis von Halogen zu Kohlenwasserstoff von mehr als 0,001, bei einer Temperatur von mehr als 20°C, bei einem zwischen 10⁵ und 50·10⁶ Pa liegenden Druck während einer Dauer, die ausreicht, um die Umwandlung in aktivierte Säurestellen zu erhalten.

2. Verfahren gemäß Anspruch 1, **dadurch gekennzeichnet, daß** der in der Phase der Aktivierung vorliegende Kohlenwasserstoff ein Paraffin-Kohlenwasserstoff ist.

3. Verfahren gemäß einem der Ansprüche 1 und 2, **dadurch gekennzeichnet, daß** der Kohlenwasserstoff, welcher in dem Milieu enthalten ist, in dem die Phase der Aktivierung veranlaßt wird, zur Gruppe der Kohlenwasserstoffe von C4 bis C8, vorzugsweise der Kohlenwasserstoffe von C5 und C6 sowie zu derjenigen der Halogenderivate davon gehört.

4. Verfahren gemäß einem der Ansprüche 1 bis 3, **dadurch gekennzeichnet, daß** die Phase der Aktivierung realisiert wird bei einer Temperatur zwischen 100°C und 250°C.

5. Verfahren gemäß einem der Ansprüche 1 bis 4, **dadurch gekennzeichnet, daß** die Säurestellen vom Lewis-Säuretyp Metallhalogenide solchen Typs sind, die erhalten wurden durch Niederschlag eines Metallhalogenids (vorzugsweise von Chlor oder von Brom), wie Aluminium-, Bor- oder Gallium- oder Zirkonium-Halogenid, insbesondere Aluminiumhalogenid, oder deren Mischungen, auf der Oberfläche des Trägers.

6. Verfahren gemäß einem der Ansprüche 1 bis 5, **dadurch gekennzeichnet, daß** die Aktivierung realisiert wird mit einem Verhältnis von Halogen zu Kohlenwasserstoff von mehr als 0,001, vorzugsweise von mehr als 0,005.

7. Verfahren gemäß einem der Ansprüche 1 bis 6, **dadurch gekennzeichnet, daß** die Halogenwasserstoffsäure mit dem Katalysator in Kontakt gebracht wird nach der Adsorption des Kohlenwasserstoffs an den Katalysator.

8. Verfahren gemäß einem der Ansprüche 1 bis 7, **dadurch gekennzeichnet, daß** die Halogenwasserstoffsäure oder deren Vorläufer in das Milieu, in dem die Aktivierung realisiert wird, auf kontinuierliche oder diskontinuierliche Weise eingeführt wird.

9. Verfahren gemäß einem der Ansprüche 1 bis 8, **dadurch gekennzeichnet, daß** die Dauer der Passage der Kohlenwasserstoffbeladung über dem Katalysator ausreicht, damit mindestens 0,5 Gewichts-% Chlor im Verhältnis zu dem Katalysatorgewicht quer zu dem Katalysatorbett passiert.

10. Verfahren gemäß einem der Ansprüche 1 bis 9, **dadurch gekennzeichnet, daß**, wenn die in situ in dem Isomerisierungsreaktor realisierte Aktivierung beendet ist, der Katalysator auf eine Temperatur zwischen 50°C und 250°C gebracht wird unter einem Druck zwischen 10⁵ und 50·10⁶ Pa mit einem Verhältnis von Wasserstoff zu Kohlenwasserstoff zwischen 0,001 und 10 und einer räumlichen Stundengeschwindigkeit zwischen 0,1 und 10 h⁻¹.

11. Verfahren gemäß einem der Ansprüche 1 bis 10, **dadurch gekennzeichnet, daß** der Katalysator mindestens ein Metall der Platinreihe enthält.

12. Verfahren gemäß einem der Ansprüche 1 bis 11, **dadurch gekennzeichnet, daß** der Gehalt des Metalls der Platinreihe im Verhältnis zu dem Träger zwischen 0,02 Gewichts-% und 2 Gewichts-%, vorzugsweise zwischen 0,05 Gewichts-% und 0,8 Gewichts-% liegt.

13. Verfahren gemäß einem der Ansprüche 1 bis 12, **dadurch gekennzeichnet, daß** der Katalysator vom Bimetall- oder vom Trimetalltyp ist.

14. Verfahren gemäß einem der Ansprüche 1 bis 13, **dadurch gekennzeichnet, daß** der feste Katalysatorträger ein Aluminiumoxid, ein Siliziumdioxid, ein Siliziumdioxid/Aluminiumoxid, ein Aluminosilikat oder eine Mischung davon, Magnesiumoxid, Zirkoniumoxid, einem Gallium-, Titan-, Thoriumoder Boroxid oder einer Mischung dieser Oxide ist.

15. Verfahren gemäß einem der Ansprüche 1 bis 14, **dadurch gekennzeichnet, daß** der Katalysatorträger ein Gamma-Aluminiumoxid oder ein Eta-Aluminiumoxid ist.

16. Verfahren gemäß einem der Ansprüche 1 bis 15, **dadurch gekennzeichnet, daß** die Halogenwasserstoffsäure in situ aus einem Vorläufer dieser Säure in dem Anwendungsreaktor des Katalysators erzeugt wird.

17. Verfahren gemäß einem der Ansprüche 1 bis 16, in dem die Halogenwasserstoffsäure Salzsäure ist, **dadurch gekennzeichnet, daß** der Vorläufer der Halogenwasserstoffsäure ein Chloralkan, insbesondere Tetrachlorkohlenstoff ist.

18. Verfahren gemäß einem der Ansprüche 1 bis 17, **dadurch gekennzeichnet, daß** der Partialdruck der Halogenwasserstoffsäure vorzugsweise zwischen 10² Pa und 10⁵ Pa liegt und der Partialdruck des Kohlenwasserstoffs mindestens gleich dem der Halogenwasserstoffsäure ist.

19. Verfahren gemäß einem der Ansprüche 1 bis 18, **dadurch gekennzeichnet, daß**, wenn der Katalysator mindestens ein Metall der Platinreihe enthält, das saure und nicht-oxidative Milieu Wasserstoff und/oder ein Gas, welches gegenüber den Bestandteilen des Katalysators inert ist, enthält.
